# EUROPÄISCHE PATENTSCHRIFT

(11) **EP 3 127 695 B1**
(45) Veröffentlichungstag und Bekanntmachung des Hinweises auf die Patenterteilung: **28.06.2017**
(21) Anmeldenummer: 15002344.8
(22) Anmeldetag: 06.08.2015
(51) Int. Cl.: B32B 7/00, B32B 7/12, B32B 21/04, B32B 21/13, B32B 21/14, B32B 3/18, E04H 12/04

(54) **SCHICHTHOLZPLATTE UND TURM FÜR EINE WINDKRAFTANLAGE AUS SCHICHTHOLZPLATTEN**
LAMINATED WOODEN PANEL AND TOWER FOR A WIND POWER STATION MADE FROM LAMINATED WOODEN PANELS
PANNEAU DE BOIS STRATIFIE ET TOUR POUR UNE EOLIENNE EN PANNEAU DE BOIS STRATIFIE

(43) Veröffentlichungstag der Anmeldung: 08.02.2017
(73) Patentinhaber: MERK Timber GmbH, 86551 Aichach (DE)
(72) Erfinder: Brand, Stephan, 70182 Stuttgart (DE); Röhm, Jochen, 70437 Stutgart (DE); Kunz, Fritz, 86573 Obergriesbach (DE)
(74) Vertreter: Reinhardt, Annette

(56) Entgegenhaltungen:
- DE-A1-102012 106 321
- FR-A- 1 224 180
- US-A- 4 012 548
- US-A1- 2013 316 124

## Beschreibung

Die Erfindung betrifft eine Schichtholzplatte der im Oberbegriff des Anspruchs 1 angegebenen Gattung sowie einen Turm für eine Windkraftanlage, der aus Schichtholzplatten aufgebaut ist.

Aus der US 4,012,548 ist ein Furnierholzaufbau bekannt, bei dem die Faserrichtung des Holzes in aufeinander folgenden Furnierlagen zueinander geneigt ist. Dabei kann jeweils zwischen zwei Furnierlagen mit in Längsrichtung verlaufenden Holzfasern eine Furnierlage mit schräg verlaufender Faserrichtung angeordnet sein, wobei die Neigungsrichtung der Faserrichtung in den Schräglagen jeweils abwechselnd zu gegenüber liegenden Seiten verläuft. Der Neigungswinkel der schräg verlaufenden Faserrichtung zur Längsrichtung ist dabei vergleichsweise klein und soll von 10° bis 25° betragen.

Auch aus der EP 0 543 163 A1 ist ein Furnieraufbau bekannt, bei dem aufeinander folgende Furnierlagen mit zueinander geneigt verlaufender Faserrichtung angeordnet werden. Der Neigungswinkel der Hauptfaserrichtung zur Längsrichtung kann bis zu 30° betragen. Holzlagen mit in Längsrichtung verlaufender Faserrichtung sind nicht vorgesehen.

Der Erfindung liegt die Aufgabe zugrunde, eine Schichtholzplatte der gattungsgemäßen Art zu schaffen, die eine hohe Schubsteifigkeit und einen hohen E-Modul in Längsrichtung besitzt. Eine weitere Aufgabe der Erfindung liegt darin, einen Turm für eine Windkraftanlage anzugeben, der eine geringe Wanddicke und eine hohe Festigkeit, insbesondere bei den im Betrieb auftretenden Torsionsbeanspruchungen besitzt.

Diese Aufgabe wird bezüglich der Schichtholzplatte durch eine Schichtholzplatte mit den Merkmalen des Anspruchs 1 gelöst. Bezüglich des Turms für eine Windkraftanlage wird die Aufgabe durch einen Turm für eine Windkraftanlage mit den Merkmalen des Anspruchs 12 gelöst.

Für die Schichtholzplatte ist vorgesehen, dass mindestens ein Abschnitt der Schichtholzplatte eine Mittelschicht mit in Längsrichtung der Schichtholzplatte ausgerichteter Faserrichtung aufweist und dass an jeder Seite der Mittelschicht eine Sperrschicht angeordnet ist. Die erste Sperrschicht umfasst mindestens eine Holzlage, in der die Faserrichtung des Holzes in einer ersten Querrichtung, die mit der Längsrichtung einen Winkel von +30° bis +60° einschließt, verläuft. An der gegenüberliegenden Seite der Mittelschicht verläuft eine zweite Sperrschicht, die mindestens eine Holzlage umfasst, in der die Fasserrichtung des Holzes in einer zweiten Querrichtung verläuft, die mit der Längsrichtung einen Winkel von -30° bis -60° einschließt. Die Faserrichtung der mindestens einen Holzlage in der ersten Sperrschicht ist demnach um einen Winkel von 30° bis 60° im Uhrzeigersinn gegenüber der Längsrichtung geneigt und die Faserrichtung der mindestens einen Holzlage in der zweiten Sperrschicht um einen Winkel von 30° bis 60° im Gegenuhrzeigersinn gegenüber der Längsrichtung. Über das in Längsrichtung ausgerichtete Holz der Mittelschicht können Kräfte in Längsrichtung gut aufgenommen werden. Die Sperrschichten erlauben aufgrund des Winkels der Faserrichtung des Holzes der mindestens einen Holzlage von 30° bis 60° zur Längsrichtung eine erhebliche Erhöhung der Schubsteifigkeit der Schichtholzplatte. Dadurch kann die Schichtholzplatte für eine vorgegebene Schubbelastung deutlich dünner ausgeführt werden als eine Schichtholzplatte, bei der die Faserrichtung in den Sperrschichten senkrecht zur Längsrichtung verläuft. Es hat sich außerdem gezeigt, dass auch der E-Modul in Längsrichtung durch die schräg verlaufende Faserrichtung in den Sperrschichten deutlich erhöht wird. Die Faserrichtung bezeichnet dabei jeweils die Hauptfaserrichtung einer Holzschicht.

Vorteilhaft verläuft die Faserrichtung aller Holzlagen der ersten Sperrschicht in einer ersten Querrichtung, die mit der Längsrichtung einen Winkel von +30° bis +60° einschließt. Die Faserrichtung aller Holzlagen der zweiten Sperrschicht verläuft vorteilhaft in einer zweiten Querrichtung, die mit der Längsrichtung einen Winkel von -30° bis -60° einschließt. Bevorzugt verläuft die Faserrichtung aller Holzlagen der ersten Sperrschicht in der gleichen Richtung. Die Faserrichtung aller Holzlagen der zweiten Sperrschicht verläuft vorteilhaft ebenfalls in der gleichen Richtung.

Es kann jedoch auch vorteilhaft sein, dass in mindestens einer Sperrschicht Holzlagen, in denen die Faserrichtung in der ersten Querrichtung verläuft, und Holzlagen, in denen die Faserrichtung in der zweiten Querrichtung verläuft, angeordnet sind. Bevorzugt bestehen die erste und die zweite Sperrschicht jeweils aus bidirektionalen Holzlagen bestehen. Dadurch ist ein bezogen auf die Dicke der Schichtholzplatte symmetrischer Aufbau möglich. Bevorzugt besteht mindestens eine Sperrschicht aus zwei oder mehr sich kreuzenden faserparallelen Lagen. Bevorzugt sind die Holzlagen dabei abwechselnd in der ersten Querrichtung, also unter einem Winkel von +30° bis +60° zur Längsrichtung, und in der zweiten Querrichtung, also unter einem Winkel von -30° bis -60° zur Längsrichtung, ausgerichtet. Dies erlaubt den Aufbau einer Schichtholzplatte mit symmetrischem Aufbau. Es hat sich außerdem gezeigt, dass sich die Tragfähigkeit der Schichtholzplatte senkrecht zur Längsrichtung durch diese Anordnung verbessert. Es kann jedoch auch vorgesehen sein, dass mindestens eine Sperrschicht aus Baufurniersperrholz oder Furnierschichtholz mit Querlagen besteht, wobei die Faserrichtung der Längslage des Baufurniersperrholzes oder Furnierschichtholzes in Querrichtung, also unter einem Winkel von +30° bis +60° oder -30° bis -60° zur Längsrichtung der Schichtholzplatte, ausgerichtet ist.

Es kann vorteilhaft sein, dass die Schichtholzplatte Abschnitte aufweist, die keine Sperrschichten aufweisen. Dies können insbesondere Endabschnitte der Schichtholzplatte sein, die zum Anschluss an angrenzende Schichtholzplatten dienen und über die große Längskräfte übertragen werden sollen. Durch die Ausbildung von Endabschnitten aus faserparallelen Lagen, die in Längsrichtung ausgerichtet sind, kann die Anschlusstragfähigkeit erhöht werden. Bevorzugt erstreckt sich der Abschnitt der Schichtholzplatte, der die Sperrschichten aufweist, über einen Großteil der Länge der Schichtholzplatte und besonders bevorzugt über die gesamte Breite der Schichtholzplatte.

Bevorzugt beträgt der erste Winkel von +40° bis +50° und der zweite Winkel von -40° bis -50°. Vorteilhaft besitzen der erste Winkel und der zweite Winkel den gleichen Betrag. Die Winkel sind demnach gleich groß aber gegensinnig orientiert.

An der der Mittelschicht abgewandten Seite der Sperrschichten ist vorteilhaft jeweils eine Holzschicht mit in Längsrichtung verlaufender Faserrichtung angeordnet. Die Sperrschichten sind demnach jeweils zwischen zwei Holzschichten mit in Längsrichtung verlaufender Faserrichtung angeordnet.

Vorteilhaft ist mindestens eine Holzlage der Schichtholzplatte eine Furnierlage. Die Dicke der Furnierlage beträgt vorteilhaft von 2 mm bis 5 mm. Vorteilhaft ist mindestens eine Schicht der Schichtholzplatte aus aufeinander liegenden Furnierlagen gebildet. Die Dicke der Schicht aus Furnierlagen beträgt vorteilhaft von 15 mm bis 45 mm, insbesondere von 22 mm bis 33 mm. Besonders vorteilhaft sind alle Schichten der Schichtholzplatte aus aufeinander liegenden Furnierlagen gebildet. Vorteilhaft bilden einzelne Furnierlagen eine Furnierschichtholzplatte. Vorteilhaft sind die Faserrichtungen aller Furnierlagen einer Furnierschichtholzplatte gleich ausgerichtet. Es kann jedoch auch vorteilhaft sein, dass eine Furnierschichtholzplatte Sperrschichten aufweist. Dadurch verlaufen nicht alle Holzlagen der Sperrschicht in Längsrichtung oder Querrichtung. Besonders vorteilhaft ist in den Sperrschichten Furnierschichtholz mit Querlagen vorgesehen. Die Schichtholzplatte ist vorteilhaft aus Furnierschichtholzplatten aufgebaut, deren Dicke von 15 mm bis 45 mm, insbesondere von 22 mm bis 33 mm beträgt. Es kann vorgesehen sein, dass mehrere Furnierschichtholzplatten mit der angegebenen Dicke aufeinander gelegt sind und gemeinsam eine Schicht der Schichtholzplatte, beispielsweise die Mittelschicht der Schichtholzplatte, bilden.

Es kann auch vorgesehen sein, dass mindestens eine Holzlage der Schichtholzplatte eine Lage aus Holzbrettern ist. Die Lage aus Holzbrettern besitzt vorteilhaft eine Dicke von 10 mm bis 40 mm, insbesondere von 22 mm bis 33 mm. Bevorzugt sind alle Holzlagen der Schichtholzplatte aus Holzbrettern aufgebaut.

Die Summe der Dicken aller Sperrschichten beträgt vorteilhaft etwa 20 % bis 35 % der Gesamtdicke der Schichtholzplatte. Dadurch werden ein hoher E-Modul in Längsrichtung und ein hoher Schubmodul erreicht. Die Dicke der Schichtholzplatte beträgt vorteilhaft 200 mm bis 320 mm, insbesondere von 220 mm bis 300 mm.

Es hat sich gezeigt, dass eine Schichtholzplatte mit einer Mittelschicht und mindestens zwei Sperrschichten, die mindestens eine Holzlage umfassen, deren Faserrichtung mit der Längsrichtung einen Winkel von +30° bis +60° bzw. von -30° bis -60° einschließt, besonders bevorzugt für den Turm einer Windkraftanlage eingesetzt werden kann, da Schichtholzplatten für Windkraftanlagen hohen Schubbelastungen ausgesetzt sind. Für einen Turm für eine Windkraftanlage ist vorgesehen, dass mindestens ein Abschnitt des Turms aus erfindungsgemäßen Schichtholzplatten aufgebaut ist. Die Längsrichtung der Schichtholzplatten ist dabei vorteilhaft in Hochrichtung des Turms ausgerichtet. Die Längsrichtung der Schichtholzplatte muss dabei nicht zwangsweise die längste Erstreckung der Schichtholzplatte bezeichnen. Es kann auch vorgesehen sein, dass die senkrecht zur Längsrichtung gemessene Breite der Schichtholzplatte größer als die Länge der Schichtholzplatte in Längsrichtung ist. Bevorzugt ist jedoch die in Längsrichtung gemessene Länge der Schichtholzplatte deutlich größer als die senkrecht hierzu gemessene Breite.

Vorteilhaft sind in Hochrichtung des Turms übereinander angeordnete Schichtholzplatten an einem Verbindungsbereich miteinander verbunden. Vorteilhaft sind im Verbindungsbereich anstatt der Sperrschichten Zwischenschichten vorgesehen, in denen die Faserrichtung des Holzes mindestens teilweise in Längsrichtung der Schichtholzplatte ausgerichtet ist. Dadurch, dass im Verbindungsbereich auch die Holzfasern in den Zwischenschichten mindestens teilweise in Längsrichtung der Schichtholzplatte ausgerichtet sind, lassen sich im Verbindungsbereich besonders hohe Kräfte in Längsrichtung, also in Hochrichtung des Turms übertragen. Dadurch kann eine hohe Stabilität des Turms erreicht werden. Vorteilhaft ist die Faserrichtung des Holzes in den Zwischenschichten vollständig in Längsrichtung der Schichtholzplatte ausgerichtet. Besonders vorteilhaft ist die Faserrichtung aller Holzschichten in Längsrichtung der Schichtholzplatte ausgerichtet. Vorteilhaft ist auch in einem an dem Verbindungsbereich angrenzenden Anschlussbereich, der oberhalb und unterhalb des Verbindungsbereichs vorgesehen sein kann, die Faserrichtung aller Holzschichten in Längsrichtung der Schichtholzplatten, also in Hochrichtung des Turms ausgerichtet. Im Verbindungsbereich sind vorteilhaft mindestens eine Erhöhung und eine Vertiefung an den übereinander angeordneten Schichtholzplatten vorgesehen, die ineinander eingreifen. Besonders bevorzugt sind Verzahnungen mit einer Vielzahl von Erhöhungen und Vertiefungen vorgesehen, die ineinander greifen.

Ausführungsbeispiele der Erfindung werden im Folgenden anhand der Zeichnung erläutert. Es zeigen:
- Fig. 1: eine schematische perspektivische Darstellung einer Schichtholzplatte,
- Fig. 2: eine schematische Schnittdarstellung durch die Schichtholzplatte aus Fig. 1 in Längsrichtung der Schichtholzplatte,
- Fig. 3: eine perspektivische Darstellung einer Windkraftanlage,
- Fig. 4: einen Schnitt durch den Turm der Windkraftanlage aus Fig. 3,
- Fig. 5: einen Schnitt entlang der Linie V-V in Fig. 4,
- Fig. 6: den Ausschnitt VI-VI aus Fig. 4 in vergrößerter Darstellung,
- Fig. 7: den Ausschnitt VII-VII in Fig. 4 in vergrößerter Darstellung,
- Fig. 8: eine ausschnittsweise Seitenansicht auf den Verbindungsbereich zweier Schichtholzplatten,
- Fig. 9: eine schematische perspektivische Darstellung eines Ausführungsbeispiels einer Schichtholzplatte mit bidirektionalen Sperrschichten,
- Fig. 10: eine schematische Schnittdarstellung durch die Schichtholzplatte aus Fig. 9 in Längsrichtung der Schichtholzplatte mit bidirektionalen Sperrschichten.

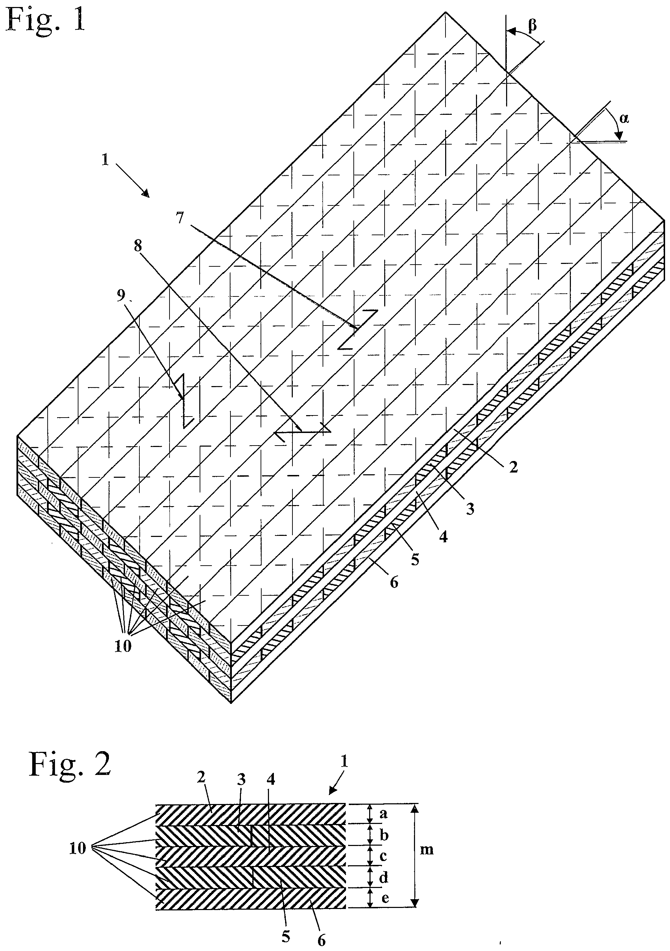

Fig. 1 zeigt ein Ausführungsbeispiel einer Schichtholzplatte 1. Die Schichtholzplatte 1 ist eine Brettsperrholzplatte, die aus einer Vielzahl von Holzbrettern 10 aufgebaut ist. Die Schichtholzplatte 1 besitzt eine erste Außenschicht 2, die an einer Außenseite der Schichtholzplatte 1 angeordnet sind. Auf die erste Außenschicht 2 folgen eine erste Sperrschicht 3, eine Mittelschicht 4, eine zweite Sperrschicht 5 sowie eine zweite Außenschicht 6. Die Außenschicht 6 ist an der der ersten Außenschicht 2 gegenüberliegenden Außenseite der Schichtholzplatte 1 angeordnet. Die Schichtholzplatte 1 besitzt im Ausführungsbeispiel demnach fünf Schichten aus Holzbrettern 10. Es können auch weitere Schichten an den Außenseiten der Schichtholzplatte 1 oder zwischen den genannten Schichten vorgesehen sein. In der ersten Außenschicht 2, der Mittelschicht 4 und der zweiten Außenschicht 6 sind die Bretter 10 in einer Längsrichtung 7 der Schichtholzplatte 1 ausgerichtet. Die Faserrichtung des Holzes, also die Hauptfaserrichtung, ist dabei in Längsrichtung 7 ausgerichtet. In der ersten Sperrschicht 3, die zwischen der ersten Außenschicht 2 und der Mittelschicht 4 angeordnet ist, verläuft die Faserrichtung in einer ersten Querrichtung 8, die um einen Winkel α zur Längsrichtung 7 geneigt ist. Der Winkel α beträgt von +30° bis +60°, bevorzugt von +40° bis +50°. Im Ausführungsbeispiel ist ein Winkel α von +45° vorgesehen. Die erste Querrichtung 8 ist dabei gegenüber der Längsrichtung 7 in der in Fig. 1 gezeigten Draufsicht im Uhrzeigersinn um den Winkel α gegenüber der Längsrichtung 7 gedreht.

Die Hauptfaserrichtung des Holzes in der zweiten Sperrschicht 5 ist in einer zweiten Querrichtung 9 ausgerichtet, die gegenüber der Längsrichtung 7 um einen Winkel β geneigt ist. Der Winkel β beträgt vorteilhaft von -30° bis -60°, insbesondere von -40° bis -50°. Im Ausführungsbeispiel ist ein Winkel β von -45° vorgesehen. Das negative Vorzeichen des Winkelmaßes besagt, dass die zweite Querrichtung 9 gegenüber der Längsrichtung 7 entgegen dem Uhrzeigersinn um den Winkel β gedreht ist. Die Winkel α und β besitzen dabei bevorzugt den gleichen Betrag, sind jedoch in Gegenrichtung zueinander gerichtet.

Wie Fig. 2 schematisch zeigt, besitzt die Schichtholzplatte 1 eine Dicke m. Die Dicke m beträgt vorteilhaft von 200 mm bis 320 mm, insbesondere von 220 mm bis 300 mm. Die erste Außenschicht 2 besitzt eine Dicke a, die erste Sperrschicht 3 eine Dicke b, die Mittelschicht 4 eine Dicke c, die zweite Sperrschicht eine Dicke d und die zweite Außenschicht 6 eine Dicke e. Im Ausführungsbeispiel sind die Dicken a bis e gleich groß. Die Summe der Dicken b und d der beiden Sperrschichten 3 und 5 beträgt im Ausführungsbeispiel damit 20% der Dicke m der Schichtholzplatte 1. Vorteilhaft beträgt die Summe der Dicken b, d aller Sperrschichten 3 und 5 20 % bis 35 % der Dicke m der Schichtholzplatte 1. Die Dicken a bis e der Schichten aus Holzbrettern 10 betragen vorteilhaft jeweils von 10 mm bis 40 mm, insbesondere von 22 mm bis 33 mm.

Im Ausführungsbeispiel sind genau zwei Sperrschichten vorgesehen. Es können jedoch weitere Mittelschichten und weitere Sperrschichten vorgesehen sein. Die Außenschichten können auch entfallen. Es können auch zusätzliche Außenschichten zur Erhöhung der Stabilität vorgesehen sein.

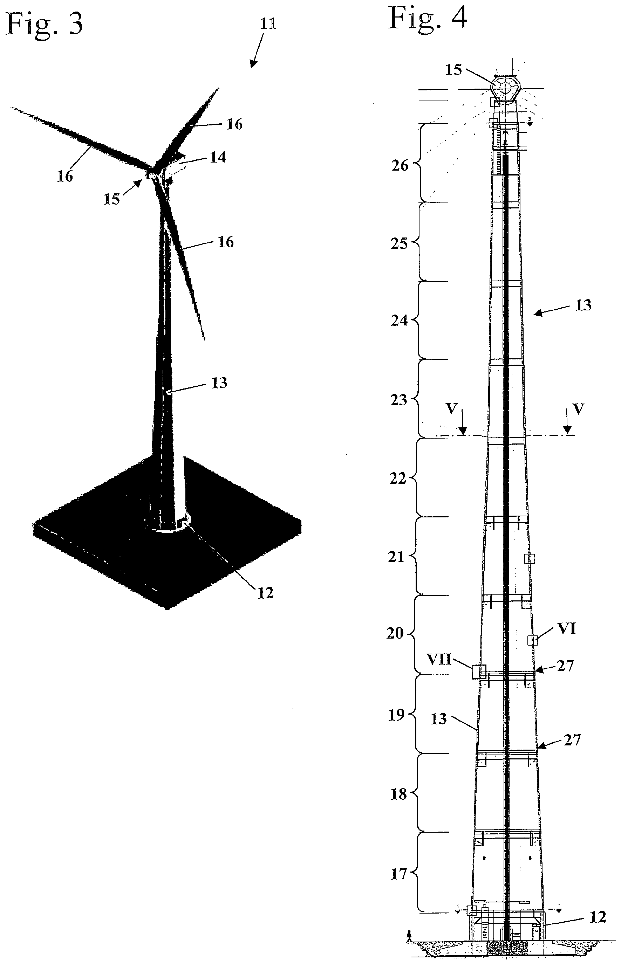

Fig. 3 als ein Ausführungsbeispiel für den Einsatz einer Schichtholzplatte eine Windkraftanlage 11. Die Windkraftanlage 11 besitzt einen Sockel 12, der beispielsweise ein Fundament aus Beton sein kann. Auf dem Sockel 12 steht ein Turm 13, der im Ausführungsbeispiel aus Holz aufgebaut ist. Auf dem Turm 13 ist eine Gondel 14 festgelegt, an der ein Rotor 15 drehbar gelagert ist. Der Rotor 15 trägt im Ausführungsbeispiel 3 Rotorblätter 16.

Der Turm 13 ist weitgehend aus Holz aufgebaut. Der Turm 13 umfasst Segmente 17 bis 26, die jeweils ringförmig ausgebildet sind und übereinander gestapelt sind. Die übereinander liegenden Segmente sind jeweils an einem Verbindungsbereich 27 miteinander verbunden.

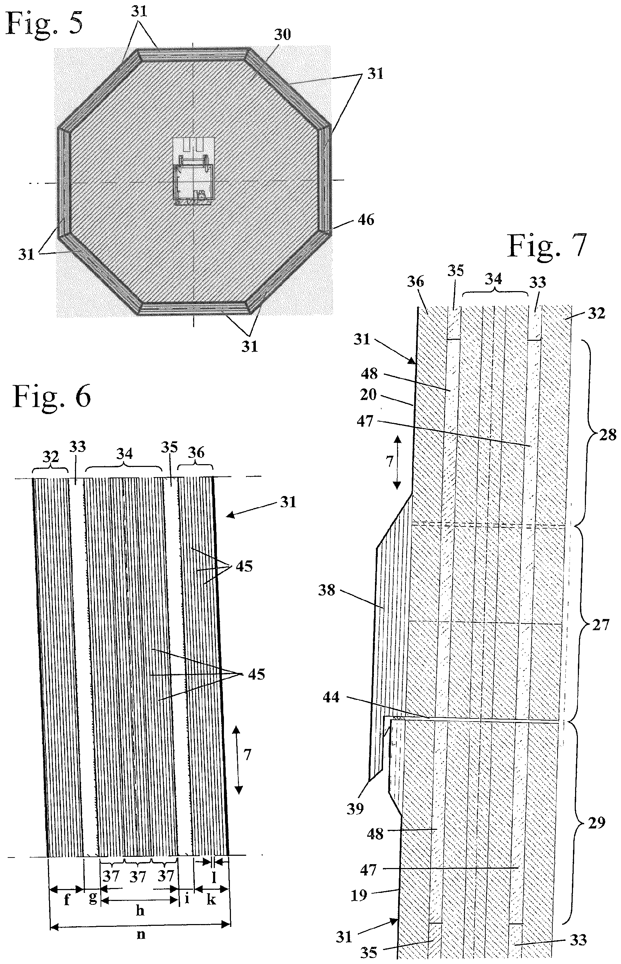

Wie Fig. 5 zeigt, besitzt der Turm 13 im Ausführungsbeispiel einen achteckigen Querschnitt. Jedes ringförmige Segment 17 bis 26 ist aus acht Schichtholzplatten 31 aufgebaut, die an ihren Längskanten 46 miteinander verklebt sind. Die Längskanten 46 sind dabei die etwa in Hochrichtung des Turms 13 verlaufenden Kanten. Aufgrund der nach oben zulaufenden Form des Turms 13 verlaufen die Längskanten 46 nicht senkrecht, sondern zur Senkrechten geringfügig geneigt. Wie Fig. 5 auch zeigt, können im Innenraum des Turms Podeste 30 vorgesehen sein.

Fig. 6 zeigt einen Schnitt durch eine Schichtholzplatte 31 des Turms 13. Die Schichtholzplatte 31 besitzt eine erste Außenschicht 32, die im Ausführungsbeispiel an der Turminnenseite angeordnet ist. Auf die erste Außenschicht 32 folgt eine erste Sperrschicht 33, eine Mittelschicht 34, eine zweite Sperrschicht 35 und eine zweite Außenschicht 36. Die zweite Außenschicht 36 ist an der Turmaußenseite angeordnet. Zwischen den genannten Schichten können weitere Schichten angeordnet sein. Vorteilhaft ist auf der zweiten Außenschicht 36 eine Beschichtung zum Schutz der Schichtholzplatte 31 vor Witterungseinflüssen angeordnet. Wie Fig. 6 zeigt, ist die Mittelschicht 36 die Schicht der Schichtholzplatte 31 mit der größten Dicke h. Die Mittelschicht 34 ist im Ausführungsbeispiel aus drei Furnierschichtholzplatten 37 aufgebaut, die jeweils aus einer Vielzahl von aufeinander liegenden Furnierlagen 45 bestehen. Auch eine Mittelschicht 34 aus zwei Furnierschichtholzplatten 37 wird als besonders vorteilhaft angesehen. An jeder Seite der Mittellage 34 ist eine Sperrschicht 33, 35 angeordnet. Die Sperrschichten 33 und 35 sind ebenfalls aus einzelnen Furnierlagen 45 aufgebaut. Die Furnierlagen 45 der Sperrschichten 33,35 bilden jeweils eine Furnierschichtholzplatte. In der Mittelschicht 34 verläuft die Hauptfaserrichtung des Holzes aller Furnierlagen 45 in einer Längsrichtung 7. In der ersten Sperrschicht 33 verläuft die Hauptfaserrichtung aller Furnierlagen 45 in einer Querrichtung 8 (Fig. 1), die zur Längsrichtung 7 um einen Winkel α von +30° bis +60°, insbesondere von +40° bis +50°, geneigt ist. Im Ausführungsbeispiel beträgt der Winkel α +45°. In der zweiten Sperrschicht 35 verläuft die Faserrichtung aller Furnierlagen 45 in einer zweiten Querrichtung 9 (Fig. 1), die mit der Längsrichtung 7 einen Winkel β von -30° bis -60°, insbesondere von -40° bis -50° einschließt. Im Ausführungsbeispiel beträgt der Winkel β -45°. In den Außenschichten 32 und 36 verläuft die Hauptfaserrichtung aller Furnierlagen 45 in Längsrichtung 7.

Wie Fig. 6 zeigt, besitzt die erste Außenschicht 32 eine Dicke f. Die Außenschicht 32 ist vorteilhaft aus einer oder zwei Furnierschichtholzplatten aufgebaut. Die erste Sperrschicht 33 besitzt eine Dicke g, die im Ausführungsbeispiel etwas kleiner als die Dicke f ist. Die Mittelschicht 34 besitzt die Dicke h, die deutlich größer als die Dicke f der Außenschicht 32 und deutlich größer als die Dicke g der ersten Sperrschicht 33 ist. Die Dicke h beträgt vorteilhaft ein Mehrfaches der Dicke f. Die zweite Sperrschicht 35 besitzt eine Dicke i, die vorteilhaft der Dicke g der ersten Sperrschicht 33 entspricht. Die zweite Außenschicht 36 besitzt eine Dicke k, die vorteilhaft der Dicke f der ersten Außenschicht 32 entspricht. Die Furnierlagen 45 besitzen eine Dicke 1, die vorteilhaft von 2 mm bis 5 mm beträgt. Die Dicke der Furnierschichtholzplatten der Schichten 32 bis 36 beträgt vorteilhaft von 15 mm bis 45 mm, insbesondere von 22 mm bis 33 mm. Die Gesamtdicke der Schichten 32 bis 36 beträgt vorteilhaft von 25 mm bis 70 mm. Die Dicke h der Mittelschicht 34 kann auch deutlich größer sein. Bevorzugt beträgt die Dicke 37 einer einzelnen Furnierschichtholzplatte 37 der Mittelschicht 34 von 40 mm bis 45 mm Die Summe der Dicken g und i aller Sperrschichten 33 und 35 beträgt vorteilhaft etwa 20 % bis 35 % der Dicke n der Schichtholzplatte 31. Die Dicke n ist dabei die Gesamtdicke der Schichtholzplatte 31. Die Dicke n der Schichtholzplatte 31 beträgt vorteilhaft von 200 mm bis 320 mm, insbesondere von 220 mm bis 300 mm. Wie Fig. 6 zeigt, ist die Längsrichtung 7 der Schichtholzplatte 31 in Hochrichtung des Turms 13 ausgerichtet.

Fig. 7 zeigt die Verbindung zweier übereinander angeordneter Schichtholzplatten 31 der Segmente 19 und 20 im Verbindungsbereich 27. Im Verbindungsbereich 27 sind die Schichtholzplatten 31 an einem zwischen den Schichtholzplatten 31 gebildeten Spalt 44 miteinander verklebt. An der Außenseite des Verbindungsbereichs 27 ist an der Schichtholzplatte 31 des oben liegenden Segments 20 ein Abdeckelement 38 angeordnet, das den Spalt 44 abdeckt. An der Außenseite des Abdeckelements 38 ist unten eine Abtropfkante 39 gebildet, an der Flüssigkeit, beispielsweise Regenwasser oder dergleichen, nach unten abtropfen kann.

Im Verbindungsbereich 27 sind anstatt der Sperrschichten 33 und 35 Zwischenschichten 47 und 48 vorgesehen, in denen die Faserrichtung des Holzes in Längsrichtung 7 verläuft und nicht zur Längsrichtung 7 geneigt ist. Oberhalb des Verbindungsbereichs 27 ist im Segment 20 ein Anschlussbereich 28 vorgesehen, in den sich die Zwischenschichten 47 und 48 erstrecken. Erst in dem oben an den Anschlussbereich 28 angrenzenden Bereich sind die Sperrschichten 33 und 35 vorgesehen, in denen die Faserrichtung zur Längsrichtung 7 um die Winkel α und β geneigt ist. Unterhalb des Verbindungsbereichs 27 ist ein Anschlussbereich 29 vorgesehen, in den sich die Zwischenschichten 47 und 48 erstrecken. Erst in dem unter dem Anschlussbereich 29 liegenden Bereich sind die Sperrschichten 33 und 35 vorgesehen, in denen die Faserrichtung um die Winkel α und β zur Längsrichtung 7 geneigt ist. Die Höhe der Anschlussbereiche 28 und 29 kann etwa die Hälfte bis etwa das Doppelte der Höhe des Verbindungsbereichs 27 betragen. Es kann auch vorgesehen sein, dass in den Zwischenschichten 47 und 48 Furnierlagen 45 vorgesehen sind, in denen die Holzfasern in Längsrichtung 7 ausgerichtet sind und weitere Furnierlagen 45, in denen die Faserrichtung in einer Querrichtung 8, 9 verläuft.

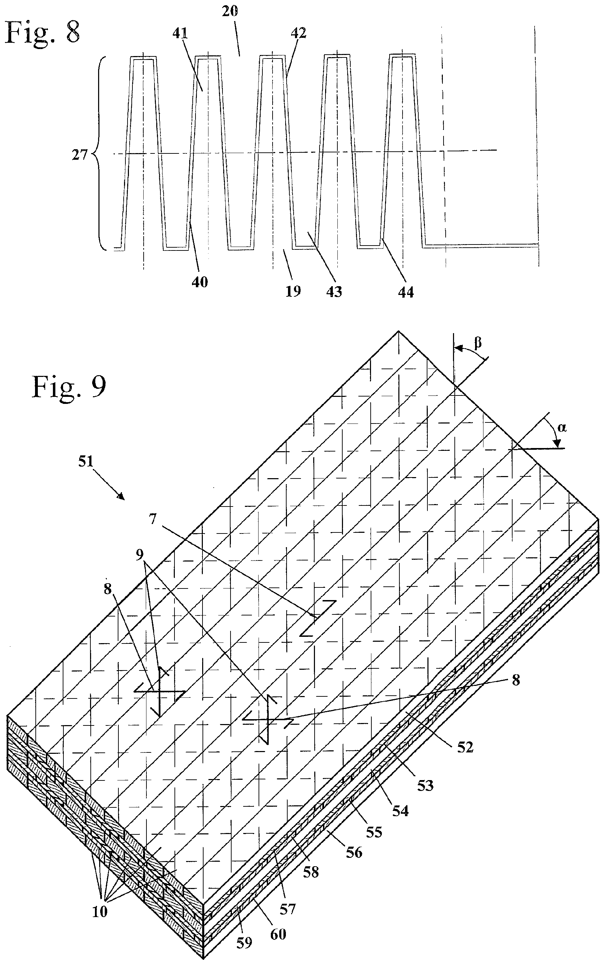

Fig. 8 zeigt die Gestaltung des Verbindungsbereichs 27 im Einzelnen. An der Oberseite des Segments 19 ist eine Vielzahl von Vertiefungen 40 und Erhöhungen 41 vorgesehen, die eine Verzahnung an der Oberseite des Segments 19 bilden. Die Unterseite des Segments 20 ist entsprechend mit einer Vielzahl von Vertiefungen 42 und Erhöhungen 43 versehen, die eine Verzahnung bilden. Die Erhöhungen 41, 43 und Vertiefungen 40, 42 greifen ineinander. Zwischen den Erhöhungen 41, 43 und Vertiefungen 40, 42 ist der Spalt 44 gebildet. Im Spalt 44 sind die Segmente 19 und 20 miteinander verklebt. Die Verbindungsbereiche 27 zwischen den weiteren Segmenten 17 bis 26 sind in entsprechender Weise ausgebildet.

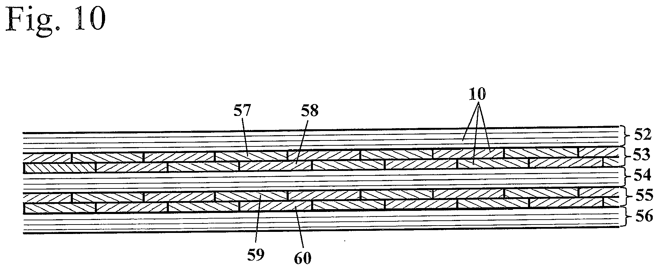

Die Figuren 9 und 10 zeigen ein Ausführungsbeispiel einer Schichtholzplatte 51, die aus einer ersten Außenschicht 52, einer ersten Sperrschicht 53, einer Mittelschicht 54, einer zweiten Sperrschicht 55 und einer zweiten Außenschicht 56 aufgebaut ist, die übereinander liegend angeordnet sind. In der Mittelschicht 54 sowie in den Außenschichten 52 und 56 verläuft die Faserrichtung des Holzes in einer Längsrichtung 7. Die Sperrschichten 53 und 55 sind jeweils aus bidirektionalen Holzlagen aufgebaut, deren Faserlängsrichtung sich überkreuzt. Die erste Sperrschicht 53 besitzt eine erste Holzlage 57, die benachbart zur Außenschicht 52 angeordnet ist und in der die Faserrichtung in einer ersten Querrichtung 8 verläuft, die zur Längsrichtung 7 einen Winkel α von +30° bis +60° einschließt. An die erste Holzlage 57 schließt eine zweite Holzlage 58 an, in der die Faserrichtung des Holzes in einer zweiten Querrichtung 9 verläuft, die unter einem Winkel β von -30° bis -60° zur Längsrichtung 7 verläuft. Auch die zweite Sperrschicht 55 umfasst eine erste Holzlage 59, in der die Faserrichtung in der ersten Querrichtung 8 verläuft und eine zweite Holzlage 60, in der die Faserrichtung in der zweiten Querrichtung 9 verläuft. Um einen symmetrischen Aufbau der Schichtholzplatte 51 zu erreichen, kann auch vorgesehen sein, dass die zweite Holzlage 60, in der die Faserrichtung in der zweiten Querrichtung 9 verläuft, angrenzend zur Mittelschicht 54 angeordnet ist und die erste Holzlage 59, in der die Faserrichtung in der ersten Querrichtung 8 ausgerichtet ist, angrenzend zur Außenschicht 56.

Fig. 10 zeigt den Aufbau der Schichtholzplatte 51 schematisch in einem Längsschnitt. Die Schichtholzplatte 51 ist aus Holzbrettern 10 aufgebaut, wie auch in Fig. 9 erkennbar ist. Die Holzbretter der Schichten 52, 54 und 56 sind dabei in Längsrichtung der Schichtholzplatte 51 schraffiert. Die Holzlagen 57 und 58 bzw. 59 und 60 besitzen sich kreuzende Faserrichtungen. Die Sperrschichten 53 und 55 können auch eine größere Anzahl von Holzlagen umfassen. Die Holzlagen sind dabei bevorzugt so angeordnet, dass die Faserrichtung aufeinanderfolgender Holzlagen abwechselnd in der ersten Querrichtung und in der zweiten Querrichtung ausgerichtet ist. Es kann jedoch auch vorgesehen sein, anstatt der Holzlagen 57 und 58 und/oder anstatt der Holzlagen 59 und 60 Baufurniersperrholz oder Furnierschichtholz anzuordnen, das seinerseits bereits selbst Querlagen besitzen kann. Die Faserrichtung der Längslage kann dabei in der ersten Querrichtung oder der zweiten Querrichtung ausgerichtet sein und die Faserrichtung der Querlage entsprechend in der zweiten oder der ersten Querrichtung. Dadurch ergibt sich ein einfacher Aufbau.

## Patentansprüche

1. Schichtholzplatte, wobei mindestens ein Abschnitt der Schichtholzplatte (1, 31, 51) mindestens eine Mittelschicht (4, 34, 54), mindestens eine erste Sperrschicht (3, 33, 53) und mindestens eine zweite Sperrschicht (5, 35, 55) umfasst, wobei die erste Sperrschicht (3, 33, 53) an einer Seite der Mittelschicht (4, 34, 54) und die zweite Sperrschicht (5, 35, 55) an der gegenüberliegenden Seite der Mittelschicht (4, 34, 54) angeordnet ist, und wobei die Faserrichtung des Holzes in der Mittelschicht (4, 34, 54) in einer Längsrichtung (7) der Schichtholzplatte (1, 31, 51) verläuft,
**dadurch gekennzeichnet, dass** die erste Sperrschicht (3, 33, 53) mindestens eine Holzlage (57) umfasst, in der die Faserrichtung des Holzes in einer ersten Querrichtung (8) verläuft, die mit der Längsrichtung (7) einen ersten Winkel (α) einschließt, der von +30° bis +60° beträgt, und dass die zweite Sperrschicht (5, 35, 55) mindestens eine Holzlage (60) umfasst, in der die Faserrichtung des Holzes in einer zweiten Querrichtung (9) verläuft, die mit der Längsrichtung (7) einen zweiten Winkel (β) einschließt, der von -30° bis -60° beträgt.

2. Schichtholzplatte nach Anspruch 1,
**dadurch gekennzeichnet, dass** in mindestens einer Sperrschicht (3, 5, 33, 35) die Faserrichtungen aller Holzlagen in einer Richtung verlaufen.

3. Schichtholzplatte nach Anspruch 1 oder 2,
**dadurch gekennzeichnet, dass** in mindestens einer Sperrschicht (53, 55) Holzlagen (57, 59), in denen die Faserrichtung in der ersten Querrichtung (8) verläuft, und Holzlagen (58, 60), in denen die Faserrichtung in der zweiten Querrichtung (9) verläuft, angeordnet sind.

4. Schichtholzplatte nach einem der Ansprüche 1 bis 3,
**dadurch gekennzeichnet, dass** der erste Winkel (α) von +40° bis +50° beträgt und dass der zweite Winkel (β) von -40° bis -50° beträgt.

5. Schichtholzplatte nach einem der Ansprüche 1 bis 4,
**dadurch gekennzeichnet, dass** der erste Winkel (α) und der zweite Winkel (β) den gleichen Betrag besitzen.

6. Schichtholzplatte nach einem der Ansprüche 1 bis 5,
**dadurch gekennzeichnet, dass** an der der Mittelschicht (4, 34, 54) abgewandten Seite der ersten Sperrschicht (3, 33, 53) und an der der Mittelschicht (4, 34, 54) abgewandten Seite der zweiten Sperrschicht (5, 35, 55) jeweils eine Holzschicht mit in Längsrichtung (7) verlaufender Faserrichtung angeordnet ist.

7. Schichtholzplatte nach einem der Ansprüche 1 bis 6,
**dadurch gekennzeichnet, dass** mindestens eine Holzlage der Schichtholzplatte (31) eine Furnierlage (45) ist.

8. Schichtholzplatte nach Anspruch 7,
**dadurch gekennzeichnet, dass** die Dicke (1) der Furnierlage von 2 mm bis 5 mm beträgt.

9. Schichtholzplatte nach Anspruch 7 oder 8,
**dadurch gekennzeichnet, dass** mindestens eine Schicht der Schichtholzplatte (31) aus aufeinander liegenden Furnierlagen (45) gebildet ist, wobei die Dicke (f, g, h, i, k) der Schicht aus Furnierlagen (45) von 15 mm bis 45 mm, insbesondere von 22 mm bis 33 mm beträgt.

10. Schichtholzplatte nach einem der Ansprüche 1 bis 9,
**dadurch gekennzeichnet, dass** mindestens eine Holzlage (57, 58, 59, 60) der Schichtholzplatte (1, 51) eine Lage aus Holzbrettern (10) ist.

11. Schichtholzplatte nach Anspruch 10,
**dadurch gekennzeichnet, dass** die Lage aus Holzbrettern (10) eine Dicke (a, b, c, d, e) von 10 mm bis 40 mm, insbesondere von 22 mm bis 33 mm besitzt.

12. Schichtholzplatte nach einem der Ansprüche 1 bis 10,
**dadurch gekennzeichnet, dass** die Summe der Dicken (b, d, g, i) aller Sperrschichten (3, 5, 33, 35, 53, 55) etwa 20% bis 35% der Dicke (m, n) der Schichtholzplatte (1, 31, 51) beträgt.

13. Schichtholzplatte nach einem der Ansprüche 1 bis 12,
**dadurch gekennzeichnet, dass** die Dicke (m, n) der Schichtholzplatte (1, 31, 51) 200 mm bis 320 mm beträgt.

14. Turm für eine Windkraftanlage, wobei mindestens ein Abschnitt des Turms (13) aus Schichtholzplatten (1, 31, 51) nach einem der Ansprüche 1 bis 11 aufgebaut ist.

15. Turm nach Anspruch 14,
**dadurch gekennzeichnet, dass** die Längsrichtung (7) der Schichtholzplatte (1, 31, 51) in Hochrichtung des Turms (13) ausgerichtet ist.

16. Turm nach Anspruch 13 oder 14,
**dadurch gekennzeichnet, dass** in Hochrichtung des Turms (13) übereinander angeordnete Schichtholzplatten (31) an einem Verbindungsbereich (27) miteinander verbunden sind, wobei im Verbindungsbereich (27) anstatt der Sperrschichten (33, 35) Zwischenschichten (47, 48) vorgesehen sind, in denen die Faserrichtung des Holzes mindestens teilweise in Längsrichtung (7) ausgerichtet ist.

## Claims

1. Laminated wooden panel, wherein at least one section of the laminated wooden panel (1, 31, 51) comprises at least one middle layer (4, 34, 54), at least one first blocking layer (3, 33, 53) and at least one second blocking layer (5, 35, 55), wherein the first blocking layer (3, 33, 53) is arranged at a side of the middle layer (4, 34, 54) and the second blocking layer (5, 35, 55) is arranged at the opposite side of the middle layer (4, 34, 54), and wherein the grain of the wood in the middle layer (4, 34, 54) extends in a longitudinal direction (7) of the laminated wooden panel (1, 31, 51),
**characterised in that** the first blocking layer (3, 33, 53) comprises at least one wood layer element (57), in which the grain of the wood extends in a first transverse direction (8), which is at a first angle (α), of from +30° to +60°, relative to the longitudinal direction (7), and that the second blocking layer (5, 35, 55) comprises at least one wood layer element (60), in which the grain of the wood extends in a second transverse direction (9), which is at a second angle (β), of from -30° to -60°, relative to the longitudinal direction (7).

2. Laminated wooden panel according to claim 1,
**characterised in that** in at least one blocking layer (3, 5, 33, 35) the grains of all wood layer elements extend in one direction.

3. Laminated wooden panel according to claim 1 or 2,
**characterised in that** in at least one blocking layer (53, 55) wood layer elements (57, 59), in which the grain extends in the first transverse direction (8), and wood layer elements (58, 60), in which the grain extends in the second transverse direction (9), are arranged.

4. Laminated wooden panel according to one of claims 1 to 3,
**characterised in that** the first angle (α) is from +40° to +50° and the second angle (β) is from -40° to -50°.

5. Laminated wooden panel according to one of claims 1 to 4,
**characterised in that** the first angle (α) and the second angle (β) are the same size.

6. Laminated wooden panel according to one of claims 1 to 5,
**characterised in that** at the side of the first blocking layer (3,33,53) facing away from the middle layer (4, 34, 54), and at the side of the second blocking layer (3, 35, 55) facing away from the middle layer (4, 34, 54), a wood layer element having a grain extending in the longitudinal direction (7) is arranged.

7. Laminated wooden panel according to one of claims 1 to 6,
**characterised in that** at least one wood layer element of the laminated wooden panel (31) is a veneer layer (45).

8. Laminated wooden panel according to claim 7,
**characterised in that** the thickness (1) of the veneer layer is from 2 mm to 5 mm.

9. Laminated wooden panel according to claim 7 or 8,
**characterised in that** at least one layer of the laminated wooden panel (31) is formed from veneer layers (45) lying one on top of the other, wherein the thickness (f, g, h, i, k) of the layer made up of veneer layers (45) is from 15 mm to 45 mm, in particular from 22 mm to 33 mm.

10. Laminated wooden panel according to one of claims 1 to 9,
**characterised in that** at least one wood layer element (57, 58, 59, 60) of the laminated wooden panel (1, 51) is a layer element made up of wooden boards (10).

11. Laminated wooden panel according to claim 10,
**characterised in that** the layer element made up of wooden boards (10) has a thickness (a, b, c, d, e) of from 10 mm to 40 mm, in particular 22 mm to 33 mm.

12. Laminated wooden panel according to one of claims 1 to 10,
**characterised in that** the sum of the thicknesses (b, d, g, i) of all blocking layers (3, 5, 33, 35, 53, 55) is approximately 20% to 35% of the thickness (m, n) of the laminated wooden panel (1, 31, 51).

13. Laminated wooden panel according to one of claims 1 to 12,
**characterised in that** the thickness (m, n) of the laminated wooden panel (1, 31, 51) is 200 to 320 mm.

14. Tower for a wind power plant, wherein at least one section of the tower (13) is constructed from laminated wooden panels (1, 31, 51) according to one of claims 1 to 11.

15. Tower according to claim 14,
**characterised in that** the longitudinal direction (7) of the laminated wooden panel (1, 31, 51) is orientated in the height direction of the tower (13).

16. Tower according to claim 13 or 14,
**characterised in that** laminated wooden panels (31) arranged one over the other in the height direction of the tower (13) are interconnected at a connection area (27), wherein in the connection area (27), instead of the blocking layers (33, 35), intermediate layers (47, 48) are provided, in which the grain of the wood is orientated at least partially in the longitudinal direction (7).

## Revendications

1. Panneau de bois stratifié, au moins une section du panneau de bois stratifié (1, 31, 51) comprenant au moins une couche centrale (4, 34, 54), au moins une première couche d'arrêt (3, 33, 53) et au moins une deuxième couche d'arrêt (5, 35, 55), la première couche d'arrêt (3, 33, 53) étant disposée sur un côté de la couche centrale (4, 34, 54) tandis que la deuxième couche d'arrêt (5, 35, 55) est disposée sur le côté opposé de la couche centrale (4, 34, 54), et le fil du bois de la couche centrale (4, 34, 54) s'étendant dans un sens longitudinal (7) du panneau de bois stratifié (1, 31, 51),
**caractérisé en ce que** la première couche d'arrêt (3, 33, 53) comprend au moins une couche de bois (57) dans laquelle le fil du bois s'étend dans un premier sens transversal (8) qui définit avec le sens longitudinal (7) un premier angle (α) de +30° à +60°, et **en ce que** la deuxième couche d'arrêt (5, 35, 55) comprend au moins une couche de bois (60) dans laquelle le fil du bois s'étend dans un deuxième sens transversal (9) qui définit avec le sens longitudinal (7) un deuxième angle (β) de -30° à -60°.

2. Panneau de bois stratifié selon la revendication 1,
**caractérisé en ce que** dans au moins une couche d'arrêt (3, 5, 33, 35), les fils de toutes les couches de bois s'étendent dans un même sens.

3. Panneau de bois stratifié selon la revendication 1 ou 2,
**caractérisé en ce que** dans au moins une couche d'arrêt (53, 55) sont disposées des couches de bois (57, 59) dans lesquelles le fil s'étend dans un premier sens transversal (8), et des couches de bois (58, 60) dans lesquelles le fil s'étend dans le deuxième sens transversal (9).

4. Panneau de bois stratifié selon l'une des revendications 1 à 3,
**caractérisé en ce que** le premier angle (α) est de +40° à +50°, et **en ce que** le deuxième angle (β) est de -40° à -50°.

5. Panneau de bois stratifié selon l'une des revendications 1 à 4,
**caractérisé en ce que** le premier angle (α) et le deuxième angle (β) ont la même valeur.

6. Panneau de bois stratifié selon l'une des revendications 1 à 5,
**caractérisé en ce que** sur le côté de la première couche d'arrêt (3,33,53) opposé à la couche centrale (4, 34, 54) et sur le côté de la deuxième couche d'arrêt (5, 35, 55) opposé à la couche centrale (4, 34, 54) est disposée une couche de bois avec un fil qui s'étend dans le sens longitudinal (7).

7. Panneau de bois stratifié selon l'une des revendications 1 à 6,
**caractérisé en ce qu'**au moins une couche de bois du panneau de bois stratifié (31) est un placage intérieur (45).

8. Panneau de bois stratifié selon la revendication 7,
**caractérisé en ce que** l'épaisseur (1) de l'âme est de 2 mm à 5 mm.

9. Panneau de bois stratifié selon la revendication 7 à 8,
**caractérisé en ce qu'**au moins une couche du panneau de bois stratifié (31) se compose d'âmes (45) superposées, l'épaisseur (f, g, h, i, k) de la couche d'âmes (45) étant de 15 mm à 45 mm, en particulier de 22 mm à 33 mm.

10. Panneau de bois stratifié selon l'une des revendications 1 à 9,
**caractérisé en ce qu'**au moins une couche de bois (57, 58, 59, 60) du panneau de bois stratifié (1, 51) est une couche de planches de bois (10).

11. Panneau de bois stratifié selon la revendication 10,
**caractérisé en ce que** la couche de planches de bois (10) présente une épaisseur (a, b, c, d, e) de 10 mm à 40 mm, en particulier de 22 mm à 33 mm.

12. Panneau de bois stratifié selon l'une des revendications 1 à 10,
**caractérisé en ce que** la somme des épaisseurs (b, d, g, i) de toutes les couches d'arrêt (3, 5, 33, 35, 53, 55) représente environ 20 % à 35 % de l'épaisseur (m, n) du panneau de bois stratifié (1, 31, 51).

13. Panneau de bois stratifié selon l'une des revendications 1 à 12,
**caractérisé en ce que** l'épaisseur (m, n) du panneau de bois stratifié (1, 31, 51) est de 200 mm à 320 mm.

14. Mât pour une éolienne, au moins une section du mât (13) étant construite à partir de panneaux de bois stratifié (1, 31, 51) selon l'une des revendications 1 à 11.

15. Mât selon la revendication 14,
**caractérisé en ce que** le sens longitudinal (7) du panneau de bois stratifié (1, 31, 51) est orienté dans le sens vertical du mât (13).

16. Mât selon la revendication 13 ou 14,
**caractérisé en ce que** des panneaux de bois stratifié (31) superposés dans le sens vertical du mât (13) sont reliés entre eux au niveau d'une zone de liaison (27), étant précisé qu'il est prévu dans la zone de liaison (27), au lieu des couches d'arrêt (33, 35), des couches intermédiaires (47, 48) dans lesquelles le fil du bois est orienté au moins en partie dans le sens longitudinal (7).
